# EUROPÄISCHE PATENTSCHRIFT

(11) **EP 2 394 905 B1**
(45) Veröffentlichungstag und Bekanntmachung des Hinweises auf die Patenterteilung: **05.12.2018**
(21) Anmeldenummer: 10165174.3
(22) Anmeldetag: 08.06.2010
(51) Int. Cl.: B63B 5/12, B64F 5/10, E04B 9/06, B63B 3/28

(54) **Ein Trägerprofil für eine Bauplatte**
A support profile for a construction board
Un profilé de support pour un panneau de construction

(43) Veröffentlichungstag der Anmeldung: 14.12.2011
(73) Patentinhaber: Knauf Gips KG, 97346 Iphofen (DE)
(72) Erfinder: Thorwart, Michael, 97234 Reichenberg (DE)
(74) Vertreter: Zech, Stefan Markus

(56) Entgegenhaltungen:
- EP-A1- 1 503 006
- EP-A2- 0 233 985
- DE-U1- 8 428 876
- US-A- 6 018 923
- US-A1- 2006 010 789
- US-B1- 6 751 922

## Beschreibung

Die Erfindung betrifft ein Trägerprofil für eine Bauplatte nach Anspruch 1 sowie die Verwendung eines Trägerprofils gemäß Anspruch 9.

Aus dem Schiffs- oder Flugzeugbau sind Spanten zur Verstärkung und Formung des Rumpfes bekannt. Auch bei der Errichtung von Kuppeln, Gewölben oder sonstigen unebenen Wand- oder Deckenabschnitten von Gebäuden werden Spanten eingesetzt, auf die Bauplatten, wie beispielsweise Gipskartonplatten, mittels Klammern aufgebracht werden. Eine derartige Befestigungsart wird als vergleichsweise unzuverlässig empfunden. Insbesondere ist ein statischer Nachweis nicht führbar.

EP0233985A2, US6751922B1, DE8428876U1, EP1503006A1 und US2006/010789A1 zeigen Trägerprofile gemäß dem Stand der Technik . Der Erfindung liegt die Aufgabe zugrunde, eine Errichtung von Kuppeln (Innenkuppeln) und sonstigen unebenen Wand- oder Deckenabschnitten in Gebäuden zu ermöglichen, wobei eine vergleichsweise hohe Zuverlässigkeit erreicht werden soll und insbesondere ein statischer Nachweis führbar sein soll.
Diese Aufgabe wird durch ein Trägerprofil für eine Bauplatte nach Anspruch 1 sowie die Verwendung eines Trägerprofils nach Anspruch 9 gelöst.

Die Aufgabe wird durch ein Trägerprofil für mindestens eine Bauplatte mit einer Befestigungsfläche zum Befestigen der Bauplatte gelöst, umfassend eine Vielzahl von Segmenten, die hintereinander angeordnet und miteinander verbunden sind, wobei je zwei hintereinander angeordnete Segmente gegeneinander um eine Kippachse verkippbar sind, wobei die Kippachse (im Wesentlichen) in durch die Segmentbefestigungsflächen der je zwei hintereinander angeordneten Segmente (17) festgelegten Ebenen liegt.

"Verkippbar" soll im Folgenden dahingehend verstanden werden, dass das Trägerprofil derart ausgebildet ist, das die einzelnen Segmente bei Anlegen eines Kippmomentes zwischen zwei benachbarten Segmenten in einem vorbestimmten Bereich gegeneinander verkippen. Je nach Verkippung sind die durch die Segmentbefestigungsflächen definierten Ebenen parallel bzw. in Deckung oder weisen einen Winkel gegeneinander auf.

Ein zentraler Gedanke der Erfindung besteht bereits darin, ein formbares Trägerprofil für eine Bauplatte zum Errichten einer Kuppel oder sonstigen unebenen Abschnitten in einem Raum bereitzustellen und nicht, wie im Stand der Technik, lediglich Klammern vorzusehen, die die Bauplatten unmittelbar an den Spanten befestigen. In konstruktiver Hinsicht können die Trägerprofile vorzugsweise an die formgebende Spante angepasst werden, dadurch dass sie in eine Vielzahl von Segmente unterteilt sind, die jeweils gegeneinander verkippbar sind. Eine entsprechend geformte, unebene Bauplatte, insbesondere Gipskartonplatte, kann dann auf statisch nachweisbare Art und Weise an der Befestigungsfläche des Trägerprofils befestigt werden. Die Befestigung ist insgesamt vergleichsweise zuverlässig, statisch nachweisbar und normgerecht. Außerdem ist ein Plattenstoß zwischen zwei verschiedenen Bauplatten vergleichsweise einfach definierbar. Insbesondere ist auch, im Gegensatz zum Stand der Technik, vergleichsweise einfach eine Beplankung auf der Baustelle realisierbar.

Vorzugsweise weisen mindestens ein erstes Segment und ein zweites Segment, die hintereinander angeordnet sind, je zwei an die Segmentbefestigungsfläche angrenzende Segmentseitenflächen auf, wobei zwischen den Segmentseitenflächen des ersten Segments und den entsprechenden Segmentseitenflächen des zweiten Segments in einem Grundzustand, bei dem die Segmente nicht gegeneinander verkippt sind, zumindest eine spaltförmige Ausnehmung, insbesondere eine (im Wesentlichen) V-förmige Ausnehmung, ausgebildet ist. Der Grundzustand, bei dem die Segmente nicht gegeneinander verkippt sind, ist insbesondere eingenommen, wenn die Segmentbefestigungsflächen des ersten und zweiten Segmentes parallel (bzw. in einer Ebene) zueinander ausgerichtet sind. Bei der spaltförmigen Ausnehmung kann es sich im Grundzustand um einen Spalt handeln, der durch Kantenflächen der hintereinander angeordneten Segmentseitenflächen definiert ist. Die hintereinander angeordneten Segmentseitenflächen können auch insbesondere im Grundzustand und/oder in einem verkippten Zustand bereichsweise überlappend ausgebildet sein. Die spaltförmige Ausnehmung kann in diesem Fall durch eine Innenfläche einer ersten Segmentseitenfläche und eine gegenüberliegende bzw. anliegende Außenfläche einer zweiten Segmentseitenfläche begrenzt sein. Durch diese Maßnahmen kann die Zuverlässigkeit des Trägerprofils auf konstruktiv einfache Art und Weise verbessert werden. Zwischen den Segmentseitenflächen ist vorzugsweise eine Spante aufgenommen bzw. aufnehmbar.

Vorzugsweise sind mindestens zwei hintereinander angeordnete Segmente einstückig miteinander verbunden. Noch weiter vorzugsweise kann das gesamte Trägerprofil einstückig ausgebildet sein. Noch weiter vorzugsweise sind mindestens zwei hintereinander angeordnete Segmente bzw. das Trägerprofil aus einem zusammenhängenden Blechstreifen geformt. Das Trägerprofil weist vorzugsweise vorbestimmte Knickstellen auf, die ein Verkippen von zwei hintereinander angeordneten Segmenten ermöglichen. Insgesamt ist der Herstellungsaufwand vergleichsweise niedrig bzw. die Zuverlässigkeit des Trägerprofils vergleichsweise hoch.

In einer bevorzugten Ausgestaltung ist mindestens ein Segment und/oder das Trägerprofil zumindest abschnittsweise als U-Profil und/oder C-Profil, insbesondere als CD-Profil ausgebildet. Vorzugsweise ist das Trägerprofil als "Flaschenprofil" ausgebildet, zeigt also im Querschnitt die Kontur einer Flasche. Derartige Profile sind hinsichtlich der Stabilität besonders geeignet.

Vorzugsweise weist mindestens ein Segment zwei an die Segmentbefestigungsfläche angrenzende Segmentseitenflächen auf, wobei die Segmentseitenflächen zumindest abschnittsweise, insbesondere in einem unmittelbar an die Segmentbefestigungsfläche angrenzenden ersten Segmentseitenflächenabschnitt in einen rechten Winkel gegenüber der Segmentbefestigungsfläche angeordnet sind. Unter einem "rechten" Winkel soll hier ein Winkel von (im Wesentlichen) 90° verstanden werden. Unter "im Wesentlichen 90°" soll insbesondere eine maximale Abweichung von +/- 10°, insbesondere +/- 5°, vorzugsweise +/- 1° verstanden werden. In einem derartigen Trägerprofil kann die Spante besonders leicht und sicher aufgenommen werden.

Weiter weist mindestens ein Segment zwei an die Segmentbefestigungsfläche angrenzenden Segmentseitenflächen auf, wobei die Segmentseitenflächen zumindest abschnittsweise, insbesondere in einem an den ersten Segmentseitenflächenabschnitt angrenzenden, zweiten Segmentseitenflächenabschnitt in einem spitzen Winkel gegenüber der Segmentbefestigungsfläche angeordnet sind. Unter einem "spitzen" Winkel soll insbesondere ein Winkel < 90°, vorzugsweise ≤ 89°, weiter vorzugsweise ≤ 80°, noch weiter vorzugsweise ≤ 65° verstanden werden. Ist in einem derartigen Trägerprofil eine Spante aufgenommen, so können die Segmentseitenflächen aufgrund der im spitzen Winkel angeordneten Abschnitte eine Kraft, insbesondere Federkraft, auf die Spante ausüben. Die Spante kann somit vergleichsweise sicher in dem Trägerprofil aufgenommen werden. Insbesondere können auch gegebenenfalls vorhandene Fertigungstoleranzen bei der Herstellung der Spante und/oder des Profilelementes, vergleichsweise einfach ausgeglichen werden.
Vorzugsweise ist in dem Trägerprofil, insbesondere in mindestens einer Segmentseitenfläche, eine Befestigungseinrichtung, vorzugsweise mindestens eine Befestigungsbohrung, insbesondere herstellerseitig, vorgesehen, um das Trägerprofil an der Spante zu befestigen. Weiter vorzugsweise weisen die Segmentseitenflächen von mindestens einem Segment je eine Bohrung auf. Durch das Vorsehen der Befestigungseinrichtung kann die Verbindung von Spante und Trägerprofil besonders einfach, durch entsprechende Befestigungsmittel, wie beispielsweise Schrauben, erfolgen.

Es ist mindestens eine Segmentseitenfläche mindestens abschnittsweise, insbesondere in einem unmittelbar an die Segmentbefestigungsfläche angrenzenden Segmentseitenflächenbereich, von der zugeordneten Segmentbefestigungsfläche aus betrachtet, sich verjüngend ausgebildet, wobei eine entsprechende Verjüngung vorzugsweise als, insbesondere gleichschenkliges, Trapez oder Dreieck ausgebildet ist. Dadurch können die Segmente besonders einfach gegeneinander verkippt werden, was den Konstruktionsaufwand reduziert.
Die obige Aufgabe wird gelöst durch eine Einheit bzw. Anordnung umfassend mindestens eine (formgebende) Spante sowie mindestens ein Trägerprofil der vorbeschriebenen Art. Bezüglich der Vorteile wird auf die weiter oben beschriebenen Vorteile bezüglich des Trägerprofils verwiesen. Durch die formgebende Spante kann das Trägerprofil, insbesondere CD-Profil an verschiedene Formen angepasst werden. Über eine Abhängung der Spante kann so eine freie Formgebung der Decke oder einer Vorsatzschale realisiert werden. Über eine statische Berechnung der Spante sowie eine normgerechte Verschraubung der Bauplatte, insbesondere Gipskartonplatte, auf dem Trägerprofil kann ein vergleichsweise zuverlässiges Deckensystem, insbesondere mit statischem Nachweis hergestellt werden. Das Deckensystem kann somit auf einfache Weise vorgefertigt werden. Alternativ ist jedoch insbesondere auch eine Beplankung auf der Baustelle möglich.

Die Einheit bzw. Anordnung umfasst vorzugsweise weiterhin mindestens eine (formbare) Bauplatte, insbesondere Gipskartonplatte. Wenn Gipskartonplatten beispielsweise angefeuchtet werden, können diese vergleichsweise variabel an die verschiedenen Formen, insbesondere die Form der formgebenden Spante bzw. des entsprechenden Trägerprofils angepasst werden. Die Bauplatte, insbesondere Gipskartonplatte kann vorgeformt sein oder erst an der Baustelle angepasst werden. Der Konstruktionsaufwand, insbesondere an der Baustelle, ist somit vergleichsweise niedrig.

Weitere Ausführungsformen ergeben sich aus den Unteransprüchen.

Nachfolgend wird die Erfindung auch hinsichtlich weiterer Merkmale und Vorteile anhand von Ausführungsbeispielen beschrieben, die anhand der Abbildungen näher erläutert werden.

Hierbei zeigen:
- Fig. 1: eine schematische Ansicht einer an eine obere Decke befestigten Spante mit Trägerprofil und Bauplatte;
- Fig. 2: eine schematische Seitenansicht des Trägerprofils;
- Fig. 3: eine schematische Schnittansicht entlang der Linie III-III aus Fig. 1 mit nur abschnittsweise wiedergegebener Spante; und
- Fig. 4: eine schematische Ansicht des Trägerprofils an einem kreisförmigen Scheibenelement.

In der nachfolgenden Beschreibung werden für gleiche und gleich wirkende Teile dieselben Bezugsziffern verwendet.

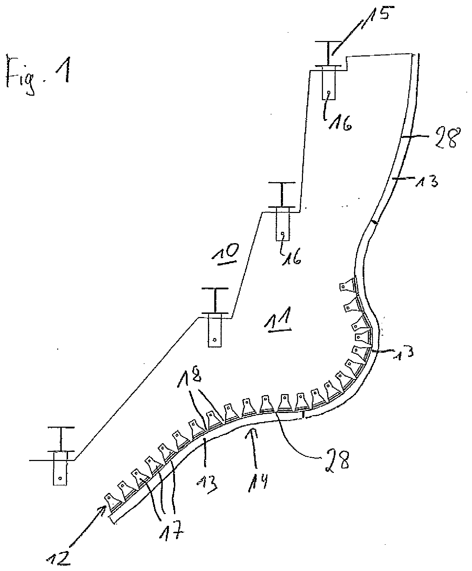

Fig. 1 zeigt eine an einer Oberdecke 10 befestigte Spante 11 mit Trägerprofil 12 und mehreren Bauplatten 13, die eine Unterdecke 14 ausbilden. Die Spante 11 ist an der Oberdecke 10 über Spantenbefestigungsmittel 15, umfassend beispielsweise U-förmige Klammern, in die die Spante 11 aufgenommen werden kann, befestigt. Die Spantenbefestigungsmittel 15 können Bohrungen 16 umfassen, in die beispielsweise Schrauben zur Befestigung der Spante 11 aufgenommen werden können.

An einer der Oberdecke 10 abgewandten Kante, insbesondere Innenkante 28, der Spante 11 ist das Trägerprofil 12 angebracht. Das Trägerprofil 12 besteht aus einer Vielzahl von Segmenten 17, die gegeneinander an vorbestimmten Knickstellen 18 verkippt werden können. Die entsprechende Kippachse liegt auf den Knickstellen 18 und ist senkrecht auf die Papierebene in Fig. 1 bzw. in Blickrichtung.

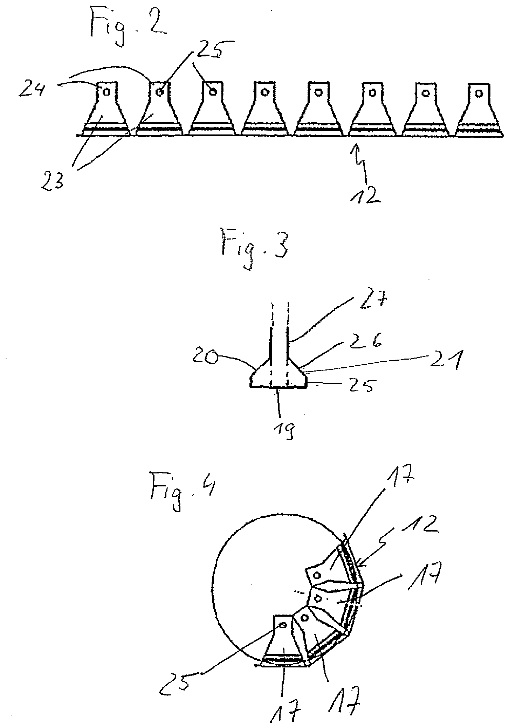

Die Segmente 17 umfassen eine Segmentbefestigungsfläche 19 (siehe Fig. 3) sowie zwei sich gegenüberliegende Segmentseitenflächen 20, 21. Zwischen den Segmentseitenflächen 20, 21 ist die in Fig. 3 abschnittsweise dargestellte Spante 11 aufgenommen.

Wie Fig. 1 entnommen werden kann, ist das Trägerprofil 12 der formgebenden Spante 11 angepasst und erlaubt es die Bauplatten 13 auf zuverlässige Weise zu befestigen. Bei der Bauplatte 13 handelt es sich vorzugsweise um eine Gipskartonplatte, die weiter vorzugsweise im befeuchteten Zustand an die Form der formgebenden Spante 11 bzw. des an dieser anliegenden Trägerprofils 12 angepasst werden kann. Die Bauplatten 13 können dann über angedeutete Befestigungsmittel 22 (vorzugsweise Schrauben) an dem Trägerprofil 12 angebracht werden.

Die Segmentseitenflächen 20, 21 (siehe Fig. 2) umfassen einen sich von der Segmentbefestigungsfläche 19 aus verjüngenden Trapezabschnitt 23, an den sich ein Rechteckabschnitt 24 anschließt. In dem Rechteckabschnitt 24 ist jeweils eine Befestigungsbohrung 25 vorgesehen, durch die ein Befestigungsmittel, wie beispielsweise eine Schraube, zur Befestigung des Trägerprofils 12 an der Spante 11 geführt werden kann. Durch das Vorsehen der Trapezabschnitte 23 können die Segmente 17 besonders einfach gegeneinander verkippt werden.

Aus Fig. 3 ergibt sich, dass das Trägerprofil 12 als (eine Art) CD-Profil bzw. "Flaschenprofil" ausgebildet ist. Die Segmentseitenflächen 20, 21 umfassen (siehe Fig. 3) einen ersten, unmittelbar an die Segmentbefestigungsfläche 19 angrenzenden, Seitenflächenabschnitt 25, der im Wesentlichen senkrecht auf die Segmentbefestigungsfläche 19 steht und einen sich an den ersten Seitenflächenabschnitt 25 anschließenden zweiten Abschnitt 26, der einen spitzen Winkel (von 30° bis 60°) gegenüber der Segmentbefestigungsfläche 19 aufweist und einen dritten Seitenflächenabschnitt 27, der wiederum etwa senkrecht auf die Seitenbefestigungsfläche 19 steht und sich an den zweiten Seitenflächenabschnitt 26 anschließt. Die Spante 11 liegt im montierten Zustand gemäß Fig. 3 an die dritten Seitenflächenabschnitte 27 der Segmentseitenflächen 20, 21 an. Durch die Ausbildung der Seitenflächenabschnitte 25, 26 und 27 kann eine Federkraft vom Trägerprofil 12 auf die Spante 11 übertragen werden, wodurch konstruktiv besonders einfach Fertigungstoleranzen der Spante 11 und/oder des Trägerprofils 12 ausgeglichen werden können.

Fig. 4 kann ein minimaler Kurvenradius entnommen werden, der durch das Trägerprofil 12 und somit die Bauplatten 13 erreicht werden kann.

Die Segmentbefestigungsfläche weist eine Längserstreckung von vorzugsweise 20 mm bis 100 mm, weiter vorzugsweise 50 mm bis 60 mm auf. Der Trapezabschnitt 23 bzw. allgemein der sich verjüngende Abschnitt verjüngt sich vorzugsweise auf 20% bis 80%, weitervorzugsweise auf 40% bis 50% der Längserstreckung der Segmentbefestigungsfläche 19. Die Ausdehnung der Segmentbefestigungsfläche 19 kann senkrecht zur Längserstreckung vorzugsweise im Bereich von 20 mm bis 120 mm, weiter vorzugsweise im Bereich von 50 mm bis 70 mm liegen. Der minimal zu erreichende Radius ist vorzugsweise im Bereich von 40 mm bis 120 mm, weiter vorzugsweise 60 mm bis 100 mm, noch weiter vorzugsweise 85 mm bis 90 mm.

Das Trägerprofil 12 ist vorzugsweise aus Metall, insbesondere Stahl und/oder Aluminium gefertigt. Die Spante 11 kann vorzugsweise aus Holz und/oder Metall und/oder Kunststoff gefertigt sein.

Es können eine Vielzahl von Spanten 11 vorgesehen sein, um beispielsweise eine Kuppel oder größeren unebenen Wandabschnitt auszuformen. Eine Bauplatte 13 kann an mehreren Trägerprofilen 12 bzw. Spanten 11 befestigt sein.

### Bezuaszeichenliste

- 10: Oberdecke
- 11: Spante
- 12: Trägerprofil
- 13: Bauplatte
- 14: Unterdecke
- 15: Spantenbefestigungsmittel
- 16: Bohrung
- 17: Segment
- 18: Knickstelle
- 19: Segmentbefestigungsfläche
- 20: erste Segmentseitenfläche
- 21: zweite Segmentseitenfläche
- 22: Befestigungsmittel
- 23: Trapezabschnitt
- 24: Rechteckabschnitt
- 25: erster Seitenflächenabschnitt
- 26: zweiter Seitenflächenabschnitt
- 27: dritter Seitenflächenabschnitt
- 28: Innenkante

## Patentansprüche

1. Trägerprofil (12) mit einer Befestigungsfläche für mindestens eine Bauplatte (13) an der die Bauplatte (13) befestigbar ist, wobei das Trägerprofil eine Vielzahl von Segmenten (17) mit je einer Segmentbefestigungsfläche (19) umfasst, die hintereinander angeordnet und miteinander verbunden sind, wobei je zwei hintereinander angeordnete Segmente (17) gegeneinander um eine Kippachse verkippbar sind, wobei die Kippachse in durch die Segmentbefestigungsflächen (19) der je zwei hintereinander angeordneten Segmente (17) festgelegten Ebenen liegt, wobei mindestens ein Segment (17) zwei an die Segmentbefestigungsfläche (19) angrenzende Segmentseitenflächen (20, 21) aufweist,
**dadurch gekennzeichnet, dass**
die Segmentseitenflächen (20, 21) zumindest abschnittsweise, in einem spitzen Winkel gegenüber der Segmentbefestigungsfläche (19) angeordnet sind, und mindestens eine Segmentseitenfläche (20, 21) mindestens in einem Segmentseitenflächenbereich von der zugeordneten Segmentbefestigungsfläche (19) aus betrachtet, sich verjüngend ausgebildet ist.

2. Trägerprofil (12) nach Anspruch 1,
**dadurch gekennzeichnet, dass**
mindestens ein erstes Segment (17) und ein zweites Segment (17), die hintereinander angeordnet sind, je zwei an die zugeordnete Segmentbefestigungsfläche (19) angrenzende Segmentseitenflächen (20, 21) aufweisen,
wobei zwischen mindestens einer der Segmentseitenflächen (20, 21) des ersten Segments (17) und mindestens einer der Segmentseitenflächen (20,21) des zweiten Segments (17) in einem Grundzustand, bei dem die Segmente nicht gegeneinander verkippt sind, je zumindest eine spaltförmige Ausnehmung und/oder eine V-förmige Ausnehmung ausgebildet ist.

3. Trägerprofil (12) nach Anspruch 1 oder 2,
**dadurch gekennzeichnet, dass**
mindestens zwei hintereinander angeordnete Segmente (17) einstückig miteinander verbunden sind.

4. Trägerprofil (12) nach einem der vorhergehenden Ansprüche,
**dadurch gekennzeichnet, dass**
mindestens ein Segment (17) und/oder das Trägerprofil (12) zumindest abschnittsweise als U-Profil und/oder C-Profil, insbesondere als CD-Profil ausgebildet ist.

5. Trägerprofil (12) nach einem der vorhergehenden Ansprüche,
**dadurch gekennzeichnet, dass**
mindestens ein Segment (17) die zwei an die Segmentbefestigungsfläche (19) angrenzende Segmentseitenflächen (20, 21) aufweist, wobei die Segmentseitenflächen (20, 21) zumindest abschnittsweise, insbesondere in einem unmittelbar an die Segmentbefestigungsfläche (19) angrenzenden ersten Segmentseitenflächenabschnitt (25), in einem rechten Winkel gegenüber der Segmentbefestigungsfläche (19) angeordnet sind.

6. Trägerprofil (12) nach einem der vorhergehenden Ansprüche,
**dadurch gekennzeichnet, dass**
die zwei Segmentseitenflächen (20, 21) in einem an den ersten Seitenflächenabschnitt (25) angrenzenden, zweiten Seitenflächenabschnitt (26) in einem spitzen Winkel gegenüber der Segmentbefestigungsfläche (19) angeordnet sind.

7. Trägerprofil (12) nach einem der vorhergehenden Ansprüche, insbesondere nach Anspruch 6,
**dadurch gekennzeichnet, dass**
in dem Trägerprofil (12) insbesondere in mindestens einer Segmentseitenfläche (20, 21), eine Befestigungseinrichtung, vorzugsweise mindestens eine Befestigungsbohrung, insbesondere herstellerseitig, vorgesehen ist, um das Trägerprofil (12) an einer Spante (11) zu befestigen.

8. Trägerprofil (12) nach einem der vorhergehenden Ansprüche,
**dadurch gekennzeichnet, dass**
mindestens eine Segmentseitenfläche (20, 21) mindestens in einem unmittelbar an die Segmentbefestigungsfläche angrenzenden Segmentseitenflächenbereich, von der zugeordneten Segmentbefestigungsfläche (19) aus betrachtet, sich verjüngend ausgebildet ist, wobei der sich verjüngende Segmentseitenflächenbereich vorzugsweise als, insbesondere gleichschenkliges, Trapez oder Dreieck ausgebildet ist.

9. Verwendung eines Trägerprofils (12) zur Aufnahme mindestens einer formgebenden Spante, wobei das Trägerprofil (12) eine Befestigungsfläche zum Befestigen mindestens einer Bauplatte (13) aufweist, wobei das Trägerprofil (12) eine Vielzahl von Segmenten (17) mit je einer Segmentbefestigungsfläche (19) umfasst, die hintereinander angeordnet und miteinander verbunden sind, wobei je zwei hintereinander angeordnete Segmente (17) gegeneinander um eine Kippachse verkippbar sind, wobei die Kippachse in durch die Segmentbefestigungsflächen (19) der je zwei hintereinander angeordneten Segmente (17) festgelegten Ebenen liegt, wobei mindestens ein Segment (17) zwei an die Segmentbefestigungsfläche (19) angrenzende Segmentseitenflächen (20, 21) aufweist,
**dadurch gekennzeichnet, dass**
die Segmentseitenflächen (20, 21) zumindest abschnittsweise, in einem spitzen Winkel gegenüber der Segmentbefestigungsfläche (19) angeordnet sind, und mindestens eine Segmentseitenfläche (20, 21) mindestens in einem Segmentseitenflächenbereich von der zugeordneten Segmentbefestigungsfläche (19) aus betrachtet, sich verjüngend ausgebildet ist.

## Claims

1. A support profile (12) having a fastening surface for at least one construction board (13), to which the construction board (13) can be fastened, wherein the support profile comprises a plurality of segments (17) each having a segment fastening surface (19) which are arranged one behind the other and are interconnected with each other, wherein respective two segments (17) arranged one behind the other are tiltable against each other about a tilting axis, wherein the tilting axis lies in a plane that is specified by the segment fastening surfaces (19) of the respective segments (17) arranged one behind the other, wherein at least one segment (17) has two segment side surfaces (20, 21) adjacent to the segment fastening surface (19),
**characterized in that**
the segment side surfaces (20, 21) at least in sections are arranged at an acute angle with respect to the segment fastening surface (19), and at least one segment side surface (20, 21), as viewed from the associated segment fastening surface (19), is formed to be tapered in at least one segment side surface area.

2. The support profile (12) according to claim 1,
**characterized in that**
at least one first segment (17) and a second segment (17) that are arranged behind each other each have two segment side surfaces (20, 21) adjacent to the associated segment fastening surface (19),
wherein between at least one of the segment side surfaces (20, 21) of the first segment (17) and at least one of the segment side surfaces (20, 21) of the second segment (17) in a basic state, in which the segments are not tilted against each other, in each case at least one gap-shaped recess and/or a V-shaped recess are formed.

3. The support profile (12) according to claim 1 or 2,
**characterized in that**
at least two segments (17) arranged one behind the other are integrally connected with each other.

4. The support profile (12) according to anyone of the preceding claims,
**characterized in that**
at least one segment (17) and/or the support profile (12) are formed, at least in sections, as a U-Profile and/or C-profile, in particular as a CD-profile.

5. The support profile (12) according to anyone of the preceding claims,
**characterized in that**
at least one segment (17) has the two segment side surfaces (20, 21) adjacent to the segment fastening surface (19), wherein the segment side surfaces (20, 21), at least in sections, in particular in a first segment side surface section (25) immediately adjacent to the segment fastening surface (19), are arranged at a right angle with respect to the segment fastening surface (19).

6. The support profile (12) according to anyone of the preceding claims,
**characterized in that**
the two segment side surfaces (20, 21) are arranged at an acute angle with respect to the segment fastening surface (19) in a second side surface section (26) adjacent to the first side surface section (25).

7. The support profile (12) according to anyone of the preceding claims, in particular according to claim 6,
**characterized in that**
in the support profile (12), in particular in at least one segment side surface (20, 21), a fixing device, preferably at least one fixing hole is provided in particular by the manufacturer for fixing the support profile (12) to a frame (11).

8. The support profile (12) according to anyone of the preceding claims,
**characterized in that**
at least one segment side surface (20, 21) is formed to be tapered at least in a segment side surface area immediately adjacent to the segment fastening surface, as viewed from the associated segment fastening surface (19), wherein the tapered segment side surface area preferably is formed as an in particular isosceles trapezium or triangle.

9. Use of a support profile (12) for receiving at least one shaping frame, wherein the support profile (12) comprises a fastening surface for fastening at least one construction board (13), the support profile (12) comprising a plurality of segments (17) each having a segment fastening surface (19) which are arranged one behind the other and are connected with each other, wherein respective two segments (17) arranged one behind the other are tiltable against each other about a tilting axis, wherein the tilting axis lies in a plane that is specified by the segment fastening surfaces (19) of the respective two segments (17) arranged one behind the other, wherein at least one segment (17) has two segment side surfaces (20, 21) adjacent to the segment fastening surface (19),
**characterized in that**
the segment side surfaces (20, 21) are arranged at least in sections at an acute angle with respect to the segment fastening surface (19), and at least one segment side surface (20, 21), as viewed from the associated segment fastening surface (19), is formed to be tapered in at least one segment side surface area.

## Revendications

1. Profilé de support (12) présentant une face de fixation pour au moins une plaque de construction (13) à laquelle la plaque de construction (13) peut être fixée, sachant que le profilé de support comprend une pluralité de segments (17) présentant respectivement une face de fixation de segment (19), lesquels sont disposés les uns derrière les autres et reliés les uns aux autres, sachant que respectivement deux segments (17) disposés l'un derrière l'autre peuvent être basculés l'un contre l'autre autour d'un axe de basculement, sachant que l'axe de basculement est situé dans des plans définis par les faces de fixation de segment (19) des respectivement deux segments (17) disposés l'un derrière l'autre, sachant qu'au moins un segment (17) présente deux faces latérales de segment (20, 21) adjacentes à la face de fixation de segment (19),
**caractérisée en ce que**
les faces latérales de segment (20, 21) sont disposées, au moins par sections, selon un angle aigu par rapport à la face de fixation de segment (19), et au moins une face latérale de segment (20, 21), considérée depuis la face de fixation de segment (19) afférente, est constituée en s'amincissant, au moins dans une zone de face latérale de segment.

2. Profilé de support (12) selon la revendication 1,
**caractérisée en ce que**
au moins un premier segment (17) et un deuxième segment (17) qui sont disposés l'un derrière l'autre présentent respectivement deux faces latérales de segment (20, 21) adjacentes à la face de fixation de segment (19) afférente,
sachant que, entre au moins une des faces latérales de segment (20, 21) du premier segment (17) et au moins une des faces latérales de segment (20, 21) du deuxième segment (17), dans un état de base dans lequel les segments ne sont pas basculés l'un contre l'autre, respectivement au moins un évidement en forme de fente et/ou un évidement en forme de V est constitué.

3. Profilé de support (12) selon la revendication 1 ou 2,
**caractérisé en ce que**
au moins deux segments (17) disposés l'un derrière l'autre sont reliés l'un à l'autre d'une seule pièce.

4. Profilé de support (12) selon l'une des revendications précédentes,
**caractérisé en ce que**
au moins un segment (17) et/ou le profilé de support (12) est constitué, au moins par sections, comme profilé U et/ou profilé C, en particulier comme profilé CD.

5. Profilé de support (12) selon l'une des revendications précédentes,
**caractérisée en ce que**
au moins un segment (17) présente les deux
faces latérales de segment (20, 21) adjacentes à la face de fixation de segment (19), sachant que les faces latérales de segment (20, 21) sont disposées, au moins par sections, en particulier dans une première section de face latérale de segment (25) directement adjacente à la face de fixation de segment (19), selon un angle droit par rapport à la face de fixation de segment (19).

6. Profilé de support (12) selon l'une des revendications précédentes,
**caractérisée en ce que**
les deux faces latérales de segment (20, 21) sont disposées, dans une deuxième section de face latérale (26) adjacente à la première section de face latérale (25), selon un angle aigu par rapport à la face de fixation de segment (19).

7. Profilé de support (12) selon l'une des revendications précédentes, en particulier selon la revendication 6,
**caractérisée en ce que**
dans le profilé de support (12), en particulier dans au moins une face latérale de segment (20, 21), un dispositif de fixation, de préférence au moins un alésage de fixation, est prévu, en particulier par le fabricant, pour fixer le profilé de support (12) à une membrure (11).

8. Profilé de support (12) selon l'une des revendications précédentes,
**caractérisée en ce que**
au moins une face latérale de segment (20, 21), considérée depuis la face de fixation de segment (19) afférente, est constituée en s'amincissant, au moins dans une zone de face latérale de segment directement adjacente à la face de fixation de segment, sachant que la zone de face latérale de segment s'amincissant est constituée de préférence comme trapèze ou triangle, en particulier isocèle.

9. Utilisation d'un profilé de support (12) pour la réception d'au moins une membrure de formage, sachant que le profilé de support (12) présente une face de fixation pour la fixation d'au moins une plaque de construction (13), sachant que le profilé de support (12) comprend une pluralité de segments (17) présentant respectivement une face de fixation de segment (19), lesquels sont disposés les uns derrière les autres et reliés les uns aux autres, sachant que respectivement deux segments (17) disposés l'un derrière l'autre peuvent être basculés l'un contre l'autre autour d'un axe de basculement, sachant que l'axe de basculement est situé dans des plans définis par les faces de fixation de segment (19) des respectivement deux segments (17) disposés l'un derrière l'autre, sachant qu'au moins un segment (17) présente deux faces latérales de segment (20, 21) adjacentes à la face de fixation de segment (19),
**caractérisée en ce que**
les faces latérales de segment (20, 21) sont disposées, au moins par sections, selon un angle aigu par rapport à la face de fixation de segment (19), et au moins une face latérale de segment (20, 21), considérée depuis la face de fixation de segment (19) afférente, est constituée en s'amincissant au moins dans une zone de face latérale de segment.
